# EUROPEAN PATENT APPLICATION

(11) **EP 4 792 911 A1**
(43) Date of publication of application: **19.08.2026**
(21) Application number: 25813251.3
(22) Date of filing: 30.09.2025
(51) Int. Cl.: B01D 35/157, C02F 1/00, B01D 35/30

(54) **FILTER REGULATING VALVE AND FILTER BOTTLE**

(30) Priority: 24.12.2024 CN 202411913579
(71) Applicant: Ningbo Jebico Filtration Technology Co., Ltd., Ningbo, Zhejiang 315300 (CN)
(72) Inventor: ZHU, Xiaofeng, Cixi City Ningbo, Znejiang 315300 (CN); WU, Kaikai, Cixi City Ningbo, Znejiang 315300 (CN)
(74) Representative: Chung, Hoi Kan
(86) International application number: PCT/CN2025/125721
(87) International publication number: WO 2026/138060

(57) **Abstract**

The present invention belongs to the technical field of filtration and separation, and specifically relates to a filtering regulating valve and a filter bottle, which comprises a valve body. Both ends of the valve body are respectively connected with a water inlet joint and a water outlet joint. A control cavity communicating with the water inlet joint is formed in the valve body. A first water inlet and a second water inlet are respectively opened on a lower end surface of the control cavity. A valve core assembly is arranged in the control cavity to control opening sizes of the first water inlet and the second water inlet. A valve bottom cover is installed on a lower end surface of the valve body. A purified water flow channel communicating with the first water inlet and an inlet water flow channel communicating with the second water inlet are respectively formed in the valve bottom cover. The present invention enables, through the design of the first water inlet and the second water inlet, adjustment of the proportion of fully filtered water and partially filtered water in practical use by controlling the opening sizes of the first water inlet and the second water inlet via the valve core assembly. Stable output water quality can be achieved according to different local water conditions or different water source requirements.

## Description

### Technical Field

The present invention relates to the technical field of filtration and separation, specifically to a filtering regulating valve and a filter bottle.

### Background Art

With the development of society, people are paying more and more attention to their own health, and water safety has become increasingly important. Existing drinking water purification equipment is directly connected to a tap water pipe, and tap water undergoes multiple stages of filtration to remove impurities, rust, heavy metals, and viruses, thereby improving water safety.

However, as water drawn by users from the tap may have various purposes, such as scenarios requiring higher water quality, e.g., for cooking, coffee machines, etc., and scenarios requiring lower water quality, e.g., handwashing, vegetable washing, etc., which do not require filtered water, current purification filter elements can only perform continuous filtration and cannot adjust the filtration ratio, which results in limited usage scenarios.

### Summary of the invention

An object of the present invention is to provide a filtering regulating valve, which solves the problem of being unable to adjust the water filtration ratio by means of a valve core assembly.

The object of the present invention is achieved as follows: A filtering regulating valve comprises a valve body, both ends of the valve body being respectively connected with a water inlet joint and a water outlet joint; a control cavity communicating with the water inlet joint is formed in the valve body; a first water inlet and a second water inlet are respectively opened on a lower end surface of the control cavity; a valve core assembly is arranged in the control cavity to control opening sizes of the first water inlet and the second water inlet; a valve bottom cover is installed on a lower end surface of the valve body; a purified water flow channel communicating with the first water inlet and an inlet water flow channel communicating with the second water inlet are respectively formed in the valve bottom cover; a first inlet port configured to connect to a filter bottle purified water interface is arranged at a lower end of the purified water flow channel; a second inlet port configured to communicate with a filter chamber of the filter bottle is arranged at a lower end of the inlet water flow channel; a purified water inlet configured to connect to a filter bottle outlet is arranged on a lower end surface of the valve bottom cover; a first purified water channel and a second purified water channel are respectively formed on the lower end surface of the valve body; one end of the first purified water channel communicates with the purified water inlet, and the other end of the first purified water channel communicates with the second purified water channel through a control channel; the other end of the second purified water channel communicates with the water outlet joint.

Preferably, a flushing outlet pipe is installed at one end of the valve body; a flushing outlet port is arranged at one end of the control channel; a flushing flow channel is formed between the valve body and the valve bottom cover; and the flushing outlet pipe communicates with the flushing outlet port through the flushing flow channel.

Preferably, a first valve stem is movably arranged in the control channel; a first return spring abuts between one end of the first valve stem and the valve body; the other end of the first valve stem extends out of the valve body and a first pushing portion is arranged thereon; a first sealing plug is arranged on a periphery of the first valve stem; the first valve stem moves horizontally along the control channel between a first position and a second position; when the first valve stem is at the first position, the flushing outlet port is closed, and the first purified water channel communicates with the second purified water channel through the control channel; when the first valve stem is at the second position, the second purified water channel is closed, and the first purified water channel communicates with the flushing outlet port through the control channel.

Preferably, a first sealing ring is arranged on a periphery of the first sealing plug; a first mounting seat is arranged in the control channel; water passing holes are opened on a side wall of the first mounting seat; a sealing member is installed at the other end of the control channel; and avoidance holes configured for the first valve stem to extend through are respectively arranged in the sealing member and the first mounting seat. Preferably, at least one external connecting head is provided on one end of the water inlet joint and on one end of the water outlet joint; at least one first connecting joint and at least one second connecting joint are respectively formed on the other end of the water inlet joint and the other end of the water outlet joint; first connecting interfaces communicating with the control cavity are respectively formed on both upper sides of the valve body; a second connecting interface communicating with the control cavity and a third connecting interface communicating with the second purified water channel are respectively formed on both lower sides of the valve body; the at least one first connecting joint communicates with the first connecting interfaces; the at least one second connecting joint on the water inlet joint communicates with the second connecting interface; and the at least one second connecting joint on the water outlet joint communicates with the third connecting interface.

Preferably, at least one water passage cavity is respectively formed in the water inlet joint and the water outlet joint, the at least one water passage cavity is arranged between the at least one external connecting head and the at least one connecting joint; at least one inlet/outlet water port configured to communicate with the at least one external connecting head is provided on one side of the at least one water passage cavity; at least one first through hole and at least one second through hole are respectively provided on the other side of the at least one water passage cavity; the at least one first through hole communicates with the at least one first connecting joint; the at least one second through hole communicates with the at least one second connecting joint; at least one second valve stem is movably arranged in the at least one water passage cavity; at least one second reset spring abuts between one end of the at least one second valve stem and the at least one water passage cavity; the other end of the at least one second valve stem extends out of the at least one joint and at least one second pushing portion is provided thereon; at least one second sealing plug is arranged on a periphery of the at least one second valve stem; the at least one second valve stem moves vertically along the at least one water passage cavity between a first position and a second position; when the at least one second valve stem is at the first position, the at least one first through hole is closed, and the at least one inlet/outlet water port communicates with the at least one second through hole through the at least one water passage cavity; when the at least one second valve stem is at the second position, the at least one second through hole is closed, and the at least one inlet/outlet water port communicates with the at least one first through hole through the at least one water passage cavity.

Preferably, the valve core assembly comprises a valve seat, a lower valve plate, an upper valve plate, and an adjusting rod configured to drive the upper valve plate to rotate; a third water inlet communicating with the first water inlet and a fourth water inlet communicating with the second water inlet are respectively provided in the lower valve plate and the valve seat; an adjusting notch is arranged on one side of the upper valve plate to control opening sizes of the third water inlet and the fourth water inlet. Preferably, a separation sleeve is arranged between a periphery of the adjusting rod and a valve body; the separation sleeve divides the control cavity into upper and lower cavities; a straight-through annular groove is formed on an upper outer periphery of the separation sleeve; and a third through hole communicating with the water inlets is opened on a lower side wall of the separation sleeve.

Preferably, a housing is installed on a periphery of the valve body; a push button is installed on a side wall of the housing; a pushing portion configured to push a first valve stem to move is formed on an inner side wall of the push button; the valve core assembly comprises an adjusting rod for controlling the rotation thereof; a rotatable adjusting rotary knob is arranged on an upper end of the housing; an upper end of the adjusting rod extends out of the valve body and is connected with the adjusting rotary knob; gear numbers are engraved on an outer wall of the adjusting rotary knob; and an indicator mark is provided on an upper end surface of the housing.

A filter bottle comprises the filtering regulating valve according to any one of the above, and further comprises a filter bottle body, wherein a filter chamber is formed in the filter bottle body, a filter element is arranged in the filter chamber, the purified water interface is formed on an upper end of the filter bottle body, an upper end of the purified water interface communicates with the first inlet port, and a lower end of the purified water interface communicates with an inlet of the filter element, and an outlet of the filter element communicates with the filter chamber; a first annular wall is formed around a periphery of the purified water interface, an inlet water interface is formed between the first annular wall and the purified water interface, an upper end of the inlet water interface communicates with the second inlet port, and a first hole communicating with the filter chamber is opened on a lower end of the inlet water interface, a second annular wall is formed around a periphery of the first annular wall, an outlet water interface is formed between the second annular wall and the first annular wall, the filter bottle outlet communicating with the filter chamber is opened at a lower end of the outlet water interface, and an upper end of the outlet water interface communicates with the purified water inlet; a third annular wall is formed around a periphery of the second annular wall, at least one protruding portion configured for the at least one second pushing portion to abut against is formed on an upper end surface of the third annular wall, so as to keep the at least one second valve stem at a first position.

The prominent and advantageous technical effects of the present invention compared to the prior art are as follows:
Through the design of the first water inlet and the second water inlet, the present invention allows, in practical use, the proportion of fully filtered water and partially filtered water to be adjusted by controlling the opening sizes of the first water inlet and the second water inlet via the valve core assembly, which enables stable output water quality according to different local water conditions or different water source requirements.

### Brief Description of the Drawings

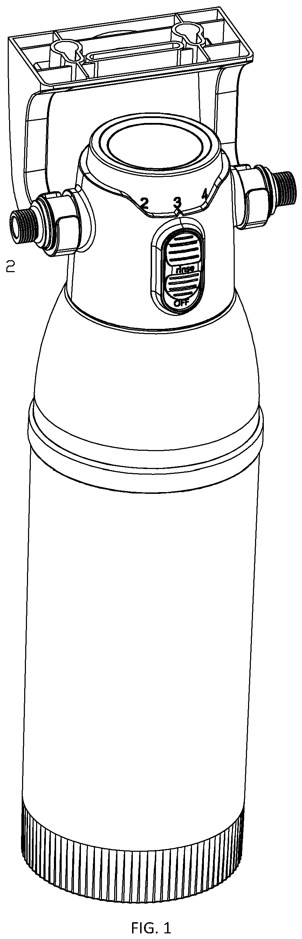

FIG. 1 is an overall structural schematic diagram of the present invention.

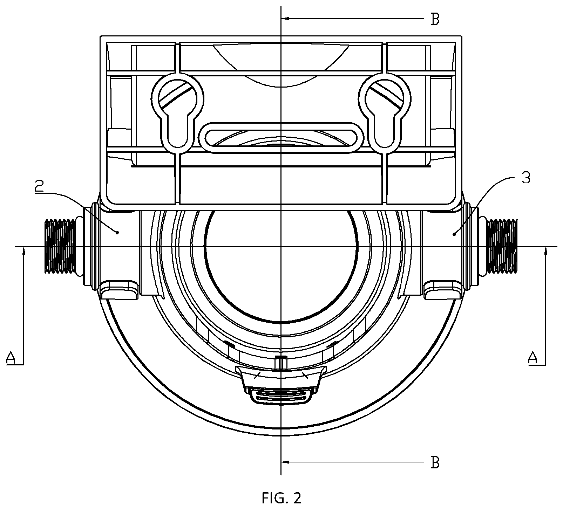

FIG. 2 is an overall top view of the present invention.

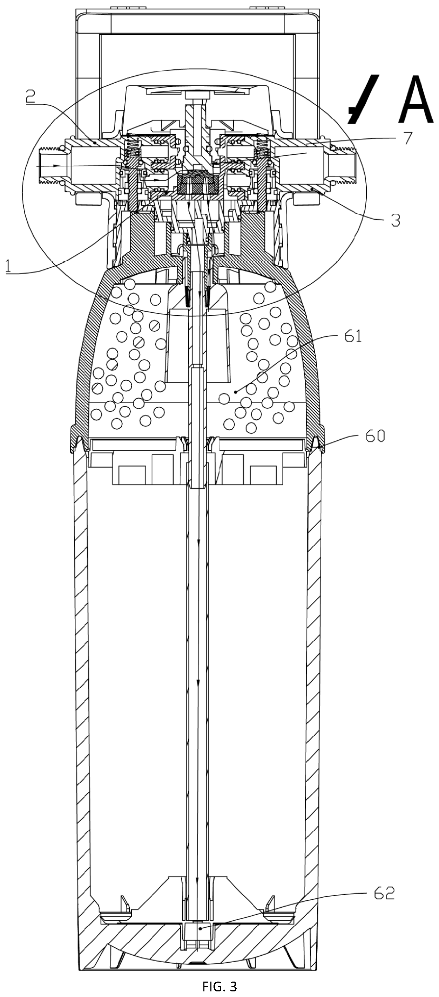

FIG. 3 is a structural cross-sectional view of section A-A in FIG. 2.
FIG. 4 is an structural enlarged view of section A in FIG. 3.

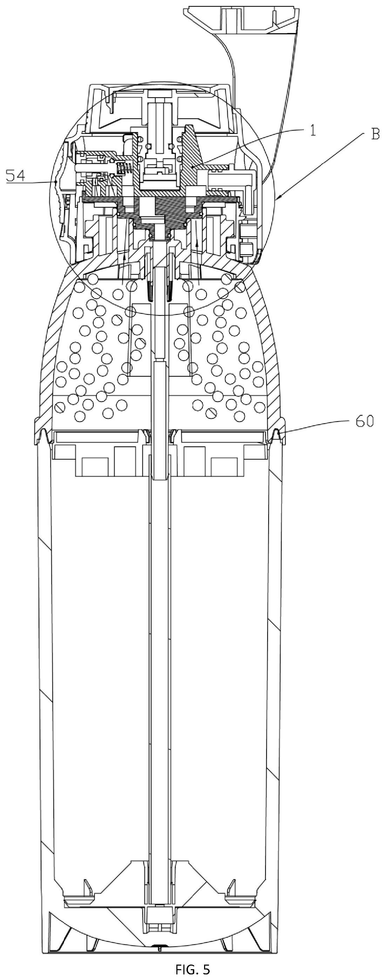

FIG. 5 is a structural cross-sectional view of section B-B in FIG. 2.
FIG. 6 is a structural enlarged view of section B in FIG. 5.
FIG. 7 is a top view of the filtering regulating valve.
FIG. 8 is a structural cross-sectional view of section C-C in FIG. 7.
FIG. 9 is a schematic diagram showing the structure after the second valve stem moves downward in FIG. 8.
FIG. 10 is a structural cross-sectional view of section D-D in FIG. 7.
FIG. 11 is a structural cross-sectional view of section E-E in FIG. 7.

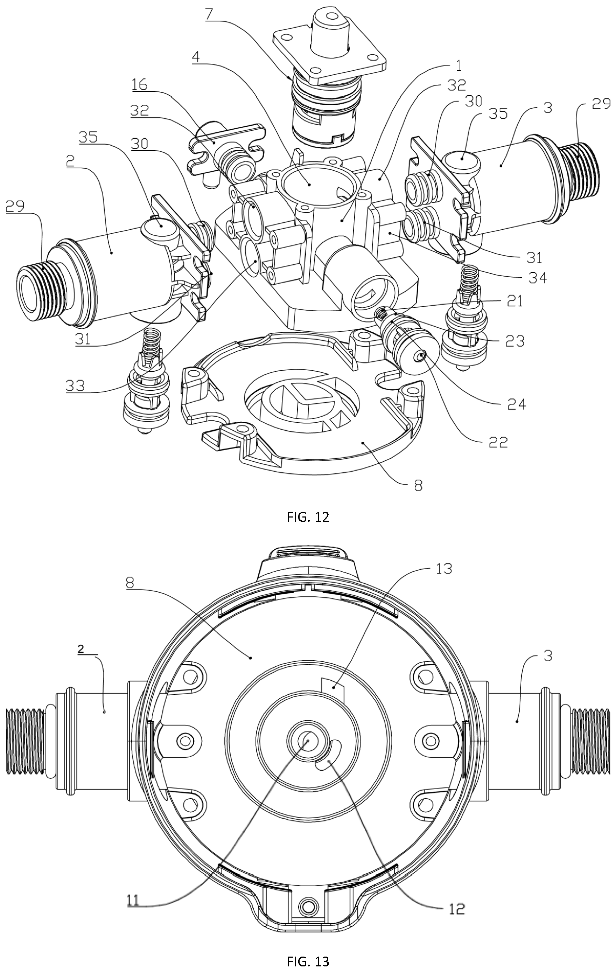

FIG. 12 is an exploded structural diagram of the components of the filtering regulating valve.
FIG. 13 is a bottom structural diagram of the filtering regulating valve.

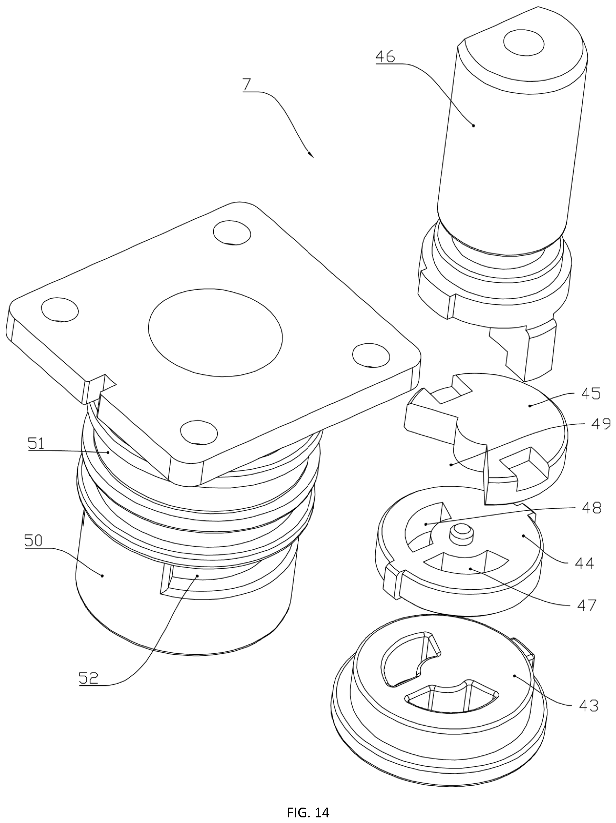

FIG. 14 is an exploded structural diagram of the components of the valve core assembly.
FIG. 15 is a first bottom structural diagram of the valve body.
FIG. 16 is a second bottom structural diagram of the valve body.

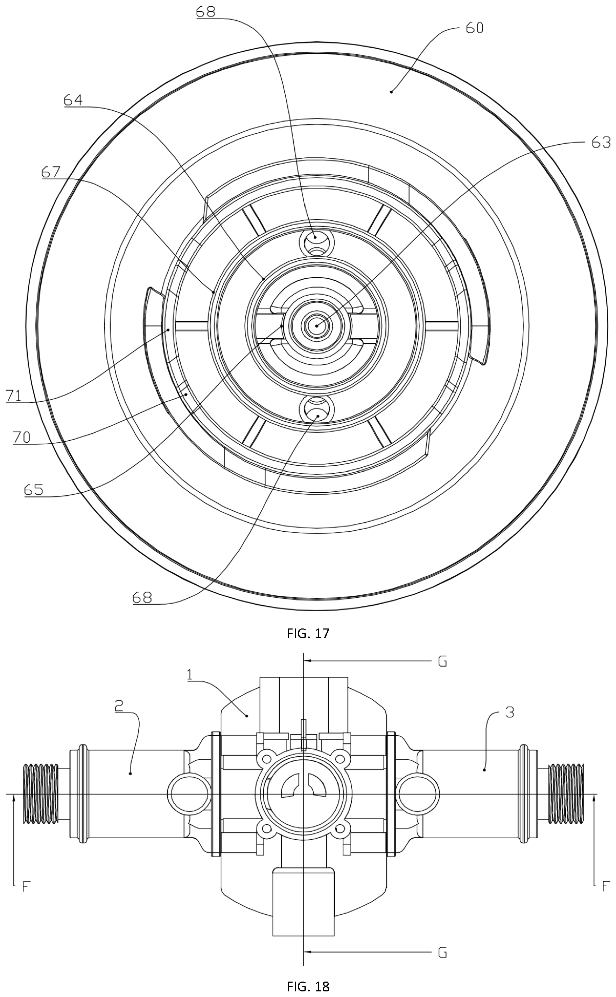

FIG. 17 is a top structural diagram of the filter bottle body.
FIG. 18 is a top view showing the connection between the valve body and the inlet/outlet water joints.

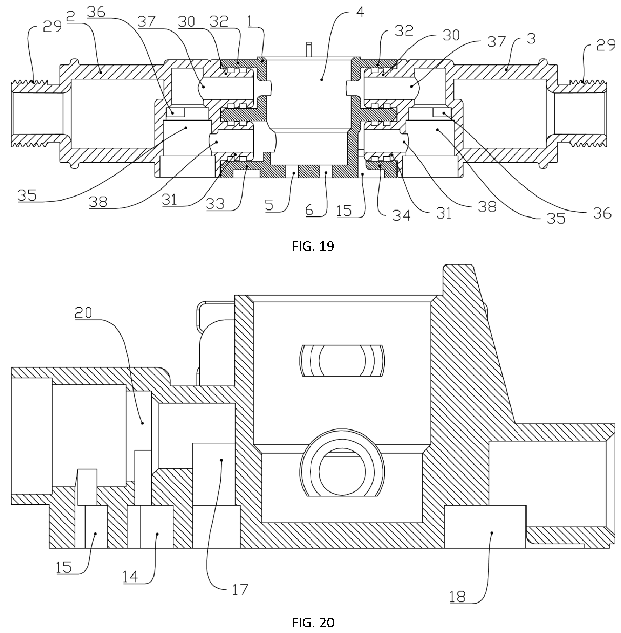

FIG. 19 is a structural cross-sectional view of section F-F in FIG. 18.
FIG. 20 is a structural cross-sectional view of section G-G in FIG. 18.

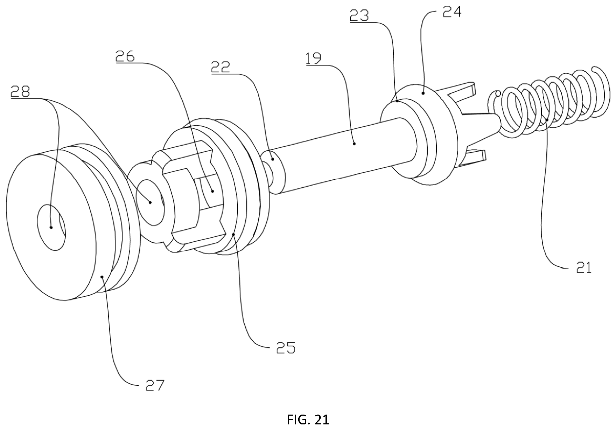

FIG. 21 is a structural schematic diagram of the first valve stem.

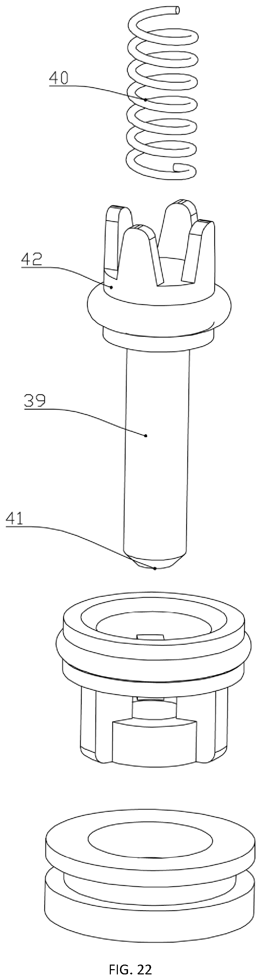

FIG. 22 is a structural schematic diagram of the second valve stem.

In the drawings: 1- valve body; 2- water inlet joint; 3- water outlet joint; 4- control cavity; 5- first water inlet; 6- second water inlet; 7- valve core assembly; 8- valve bottom cover; 9- purified water flow channel; 10- inlet water flow channel; 11- first inlet port; 12- second inlet port; 13- purified water inlet; 14- first purified water channel; 15- second purified water channel; 16- flushing outlet pipe; 17- flushing outlet port; 18- flushing flow channel; 19- first valve stem; 20- control channel; 21- first return spring; 22- first pushing portion; 23- first sealing plug; 24- first sealing ring; 25-first mounting seat; 26- water passing hole; 27- sealing member; 28- avoidance hole; 29- external connecting head; 30- first connecting joint; 31- second connecting joint; 32- first connecting interface; 33- second connecting interface; 34- third connecting interface; 35- water passage cavity; 36- inlet/outlet water port; 37- first through hole; 38- second through hole; 39- second valve stem; 40- second return spring; 41- second pushing portion; 42- second sealing plug; 43- valve seat; 44- lower valve plate; 45-upper valve plate; 46- adjusting rod; 47- third water inlet; 48- fourth water inlet; 49-adjusting notch; 50- separation sleeve; 51- straight-through annular groove; 52- third through hole; 53- housing; 54- push button; 55- pushing portion; 57- adjusting rotary knob; 58- gear numbers; 59- indicator mark; 60- filter bottle body; 61- filter chamber; 62- filter element; 63- purified water interface; 64- first annular wall; 65- inlet water interface; 66- first hole; 67- second annular wall; 68- outlet water interface; 69- filter bottle outlet; 70- third annular wall; and 71- protruding portion.

### Detailed Description of Embodiments

Hereinafter, the specific embodiments of the present invention are further described in detail in conjunction with the accompanying drawings.

A filtering regulating valve comprises a valve body 1. Both ends of the valve body 1 are respectively connected with a water inlet joint 2 and a water outlet joint 3. A control cavity 4 communicating with the water inlet joint 2 is formed in the valve body 1. A first water inlet 5 and a second water inlet 6 are respectively opened on a lower end surface of the control cavity 4. A valve core assembly 7 is arranged in the control cavity 4 to control opening sizes of the first water inlet 5 and the second water inlet 6. A valve bottom cover 8 is installed on a lower end surface of the valve body 1. A purified water flow channel 9 communicating with the first water inlet 5 and an inlet water flow channel 10 communicating with the second water inlet 6 are respectively formed in the valve bottom cover 8. A first inlet port 11 configured to connect to a filter bottle purified water interface 63 is arranged at a lower end of the purified water flow channel 9, for entering the filter element for filtration. A second inlet port 12 configured to communicate with a filter chamber 61 of the filter bottle is arranged at a lower end of the inlet water flow channel 10, for directly entering the filter chamber 61 without passing through the filter element. A purified water inlet 13 configured to connect to a filter bottle outlet 69 is arranged on a lower end surface of the valve bottom cover 8. A first purified water channel 14 and a second purified water channel 15 are respectively formed on the lower end surface of the valve body 1. One end of the first purified water channel 14 communicates with the purified water inlet 13, and the other end of the first purified water channel 14 communicates with the second purified water channel 15 through a control channel 20. The other end of the second purified water channel 15 communicates with the water outlet joint 3.

Through the design of the first water inlet 5 and the second water inlet 6, the present invention allows, in practical use, the proportion of fully filtered water and partially filtered water to be adjusted by controlling the opening sizes of the first water inlet 5 and the second water inlet 6 via the valve core assembly 7, which enables stable output water quality according to different local water conditions or different water source requirements.

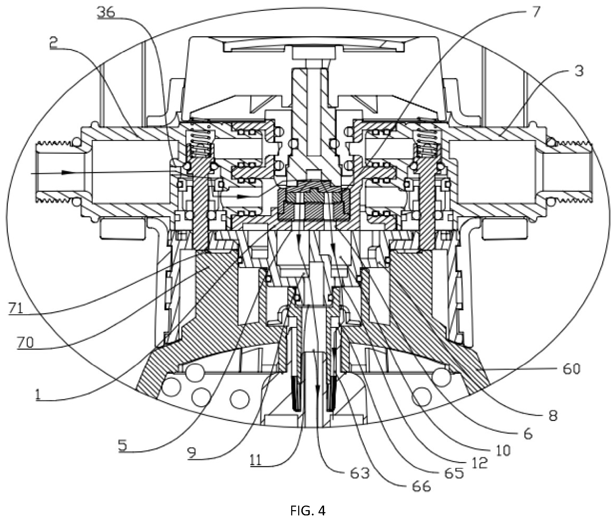

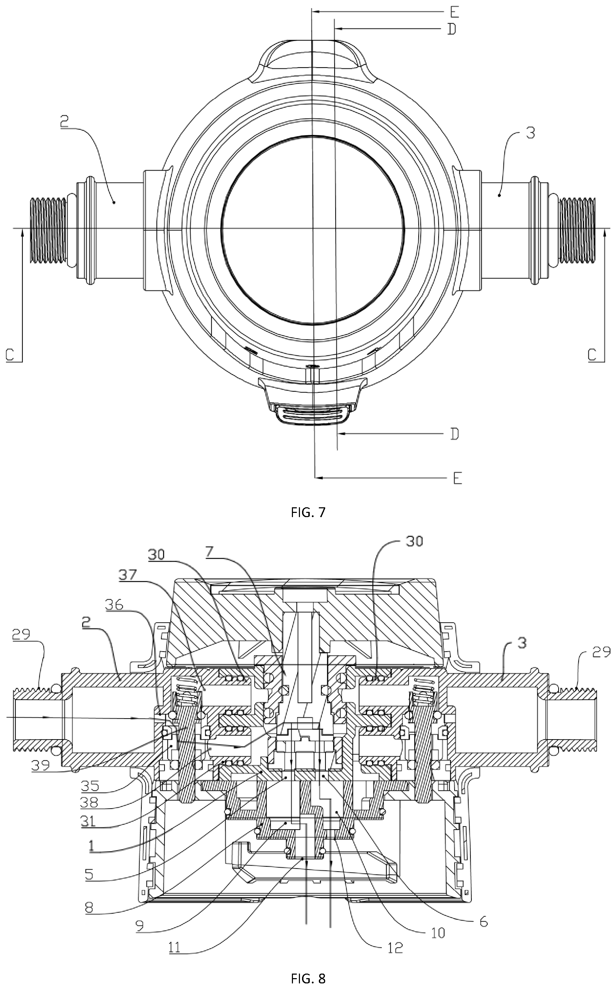

After connecting the filtering regulating valve to the filter bottle body 60, with reference to FIG. 4 and FIG. 8, an external water source will first pass through the water inlet joint 2 into the valve core assembly 7, and then be divided into two paths. One water path enters the filter element for filtration via the first water inlet 5, the purified water flow channel 9, and the first inlet port 11. The other water path directly enters the filter chamber 61 via the second water inlet 6, the inlet water flow channel 10, and the second inlet port 12. The filter chamber 61 is provided with filtering substances for improving taste. Finally, the water from both paths converges in the filter chamber 61 and flows out together from the water outlet joint 3. Therefore, in practical use, the proportion of fully filtered water and partially filtered water can be adjusted by regulating the opening sizes of the first water inlet 5 and the second water inlet 6 via the valve core assembly.

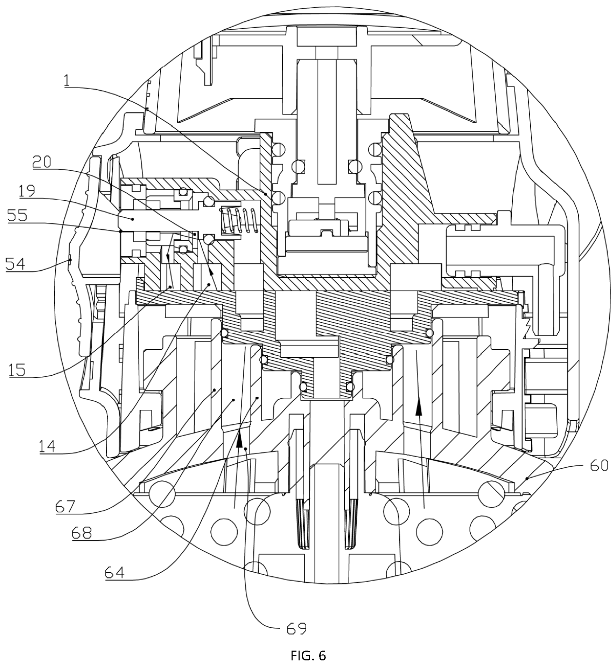

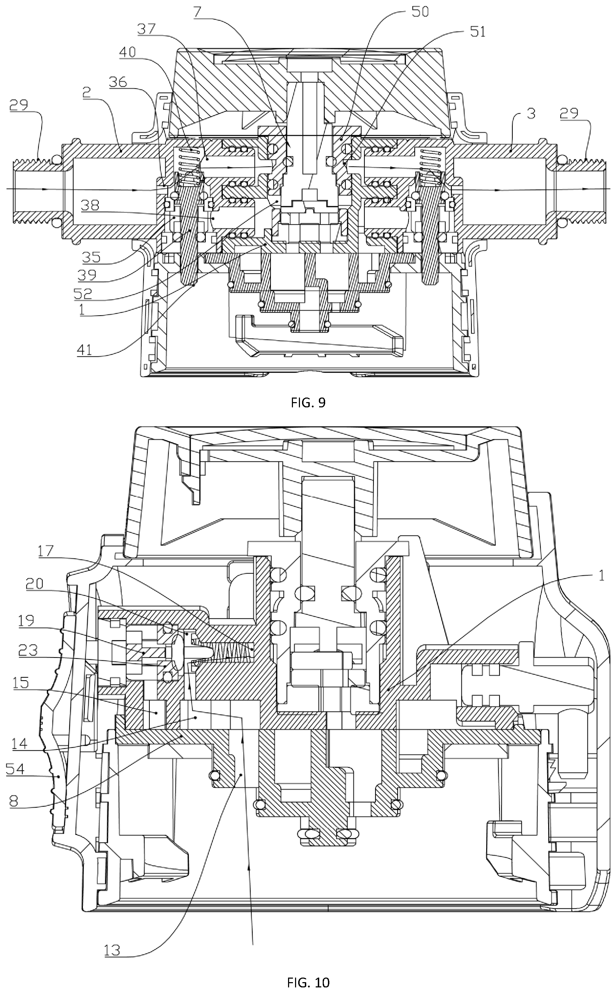

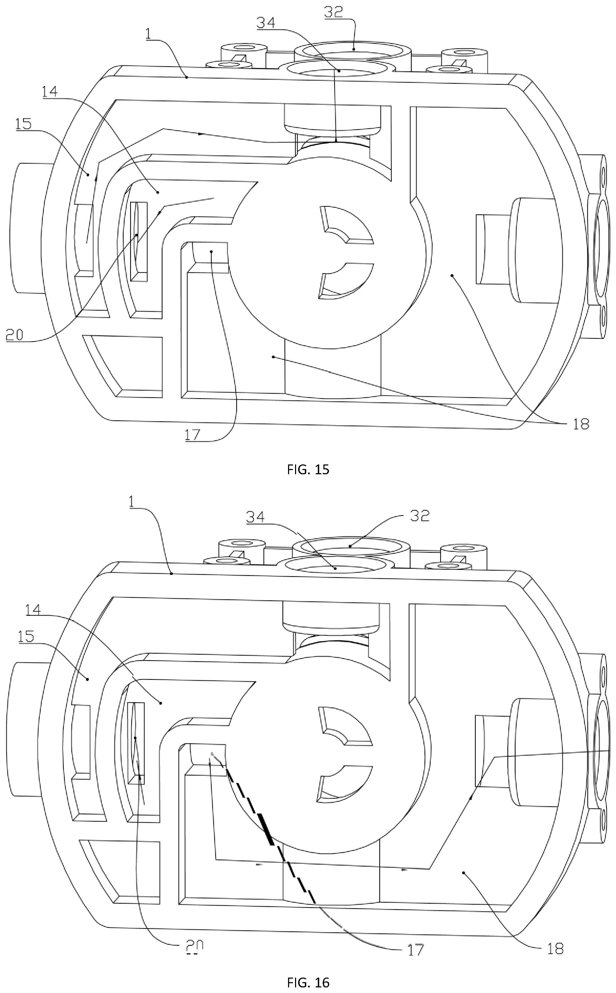

When water is being output, with reference to FIG. 6 and FIG. 10, water from the filter chamber 61 enters the purified water inlet 13 via the filter bottle outlet 69. Specifically, with reference to FIG. 15, it then passes sequentially through the first purified water channel 14, the control channel 20, and the second purified water channel 15, before flowing out from the water outlet joint 3.

A flushing outlet pipe 16 is installed at one end of the valve body 1. A flushing outlet port 17 is arranged at one end of the control channel 20. A flushing flow channel 18 is formed between the valve body 1 and the valve bottom cover 8. The flushing outlet pipe 16 communicates with the flushing outlet port 17 through the flushing flow channel 18.

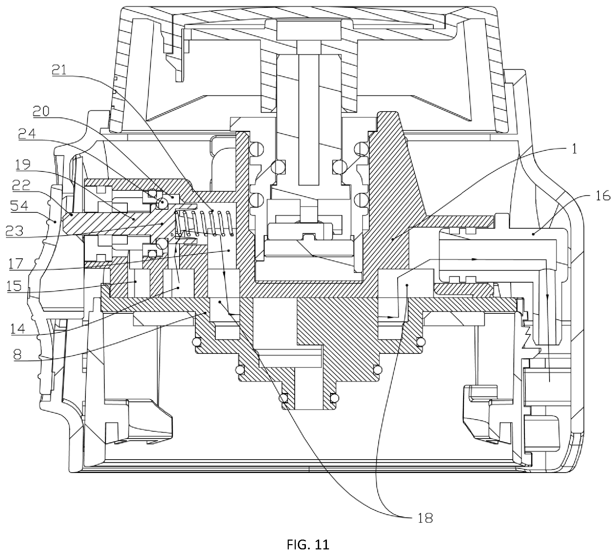

A first valve stem 19 is movably arranged in the control channel 20. A first return spring 21 abuts between one end of the first valve stem 19 and the valve body 1. The other end of the first valve stem 19 extends out of the valve body 1 and a first pushing portion 22 is arranged thereon. A first sealing plug 23 is arranged on a periphery of the first valve stem 19. The first valve stem 19 moves horizontally along the control channel 20 between a first position and a second position. When the first valve stem 19 is at the first position, the flushing outlet port 17 is closed, and the first purified water channel 14 communicates with the second purified water channel 15 through the control channel 20, allowing purified water to flow out normally from the water outlet joint 3. When the first valve stem 19 is at the second position, the second purified water channel 15 is closed, and the first purified water channel 14 communicates with the flushing outlet port 17 through the control channel 20. At this time, water cannot flow out through the water outlet joint but flows out through the flushing outlet pipe. When it is required to flush the valve body or filter element, by pushing down the push button 54, the first valve stem 19 can be moved to the second position. Referring to Figs. 10, 11, and 16, at this position, the second purified water channel 15 is closed, and water cannot flow out from the water outlet joint. Water can only enter the flushing outlet port 17 through the control channel 20 and then flow out from the flushing outlet pipe 16 via the flushing flow channel 18.

Through the design of the present water path structure, in practical operation, the flushing water path or the purified water path can be switched simply by operating the push button 54, which facilitates use and is simple to operate.

A first sealing ring 24 is arranged on a periphery of the first sealing plug 23. A first mounting seat 25 is arranged in the control channel 20. Water passing holes 26 are opened on a side wall of the first mounting seat 25. A sealing member 27 is installed at the other end of the control channel 20. Avoidance holes 28 configured for the first valve stem 19 to extend through are respectively arranged in the sealing member 27 and the first mounting seat 25.

At least one external connecting head 29 is provided on one end of the water inlet joint 2 and on one end of the water outlet joint 3. At least one first connecting joint 30 and at least one second connecting joint 31 are respectively formed on the other end of the water inlet joint 2 and the other end of the water outlet joint 3. First connecting interfaces 32 communicating with the control cavity 4 are respectively formed on both upper sides of the valve body 1. A second connecting interface 33 communicating with the control cavity 4 and a third connecting interface 34 communicating with the second purified water channel 15 are respectively formed on both lower sides of the valve body 1. The at least one first connecting joint 30 communicates with the first connecting interfaces 32. The at least one second connecting joint 31 on the water inlet joint 2 communicates with the second connecting interface 33. The at least one second connecting joint 31 on the water outlet joint 3 communicates with the third connecting interface 34.

At least one water passage cavity 35 is respectively formed in the water inlet joint 2 and the water outlet joint 3, the at least one water passage cavity 35 is arranged between the at least one external connecting head 29 and the at least one connecting joint. At least one inlet/outlet water port 36 configured to communicate with the at least one external connecting head 29 is provided on one side of the at least one water passage cavity 35. At least one first through hole 37 and at least one second through hole 38 are respectively provided on the other side of the at least one water passage cavity 35. The at least one first through hole 37 communicates with the at least one first connecting joint 30. The at least one second through hole 38 communicates with the at least one second connecting joint 31. At least one second valve stem 39 is movably arranged in the at least one water passage cavity 35. At least one second reset spring 40 abuts between one end of the at least one second valve stem 39 and the at least one water passage cavity 35. The other end of the at least one second valve stem 39 extends out of the at least one joint and at least one second pushing portion 41 is provided thereon. At least one second sealing plug 42 is arranged on a periphery of the at least one second valve stem 39. The at least one second valve stem 39 moves vertically along the at least one water passage cavity 35 between a first position and a second position. Referring specifically to FIG. 8, when the at least one second valve stem 39 is at the first position, the at least one first through hole 37 is closed, and the at least one inlet/outlet water port 36 communicates with the at least one second through hole 38 through the at least one water passage cavity 35.

Specifically with reference to FIG. 9, when the filter bottle is removed, the at least one second valve stem 39 will automatically move to the second position. At this time, the at least one second through hole 38 is closed, and the at least one inlet/outlet water port 36 communicates with the at least one first through hole 37 through the at least one water passage cavity 35. Although water does not pass through the filter element for filtration, it can still flow through the at least one water passage cavity 35 and out from the water outlet joint 3, which effectively prevents subsequent equipment from being damaged due to prolonged dry burning.

The valve core assembly 7 comprises a valve seat 43, a lower valve plate 44, an upper valve plate 45, and an adjusting rod 46 configured to drive the upper valve plate 45 to rotate. A third water inlet 47 communicating with the first water inlet 5 and a fourth water inlet 48 communicating with the second water inlet 6 are respectively provided in the lower valve plate 44 and the valve seat 43. An adjusting notch 49 is arranged on one side of the upper valve plate 45 to control opening sizes of the third water inlet 47 and the fourth water inlet 48.

A separation sleeve 50 is arranged between a periphery of the adjusting rod 46 and the valve body 1. The separation sleeve 50 divides the control cavity 4 into upper and lower cavities. A straight-through annular groove 51 is formed on an upper outer periphery of the separation sleeve 50, thereby connecting the cavities between the two first connecting joints 30. A third through hole 52 communicating with the water inlets is opened on a lower side wall of the separation sleeve 50, allowing water to enter the valve core assembly 7.

A housing 53 is installed on a periphery of the valve body 1. A push button 54 is installed on a side wall of the housing 53. A pushing portion 55 configured to push the first valve stem 19 to move is formed on an inner side wall of the push button 54. The valve core assembly 7 comprises an adjusting rod 46 for controlling the rotation thereof. A rotatable adjusting rotary knob 57 is arranged on an upper end of the housing 53. An upper end of the adjusting rod 46 extends out of the valve body 1 and is connected with the adjusting rotary knob 57. Gear numbers 58 are engraved on an outer wall of the adjusting rotary knob 57. An indicator mark 59 is provided on an upper end surface of the housing 53. Through the cooperation of the gear numbers 58 and the indicator mark 59, the gear position after rotating the adjusting rotary knob 57 can be clearly indicated.

A filter bottle comprises the filtering regulating valve according to any one of the above, and further comprises a filter bottle body 60. A filter chamber 61 is formed in the filter bottle body 60. A filter element 62 is arranged in the filter chamber 61. The purified water interface 63 is formed on an upper end of the filter bottle body 60. An upper end of the purified water interface 63 communicates with the first inlet port 11, and a lower end of the purified water interface 63 communicates with an inlet of the filter element 62. The specific position of the filter element is in the cavity below the filter chamber 61 and between the filter element 62. An outlet of the filter element 62 communicates with the filter chamber 61. A first annular wall 64 is formed around a periphery of the purified water interface 63. An inlet water interface 65 is formed between the first annular wall 64 and the purified water interface 63. An upper end of the inlet water interface 65 communicates with the second inlet port 12, and a first hole 66 communicating with the filter chamber 61 is opened on a lower end of the inlet water interface 65. A second annular wall 67 is formed around a periphery of the first annular wall 64. An outlet water interface 68 is formed between the second annular wall 67 and the first annular wall 64. The filter bottle outlet 69 communicating with the filter chamber 61 is opened at a lower end of the outlet water interface 68, and an upper end of the outlet water interface 68 communicates with the purified water inlet 13. A third annular wall 70 is formed around a periphery of the second annular wall 67. At least one protruding portion 71 configured for the at least one second pushing portion 41 to abut against is formed on an upper end surface of the third annular wall 70, so as to keep the at least one second valve stem 39 at the first position.

The above shows and describes the basic principles, main features, and advantages of the present invention. Those skilled in the art should understand that the present invention is not limited by the above embodiments. The above embodiments and description only illustrate the principles of the present invention. Without departing from the spirit and scope of the present invention, the present invention may have various changes and improvements, all of which fall within the claimed scope of the present invention. The protection scope of the present invention is defined by the appended claims and their equivalents.

## Claims

1. A filtering regulating valve, comprising a valve body (1), wherein both ends of the valve body (1) are respectively connected with a water inlet joint (2) and a water outlet joint (3); a control cavity (4) communicating with the water inlet joint (2) is formed in the valve body (1); a first water inlet (5) and a second water inlet (6) are respectively opened on a lower end surface of the control cavity (4); a valve core assembly (7) is arranged in the control cavity (4) to control opening sizes of the first water inlet (5) and the second water inlet (6); a valve bottom cover (8) is installed on a lower end surface of the valve body (1); a purified water flow channel (9) communicating with the first water inlet (5) and an inlet water flow channel (10) communicating with the second water inlet (6) are respectively formed in the valve bottom cover (8); a first inlet port (11) configured to connect to a filter bottle purified water interface (63) is arranged at a lower end of the purified water flow channel (9); a second inlet port (12) configured to communicate with a filter chamber (61) of the filter bottle is arranged at a lower end of the inlet water flow channel (10); a purified water inlet (13) configured to connect to a filter bottle outlet (69) is arranged on a lower end surface of the valve bottom cover (8); a first purified water channel (14) and a second purified water channel (15) are respectively formed on the lower end surface of the valve body (1); one end of the first purified water channel (14) communicates with the purified water inlet (13), and the other end of the first purified water channel (14) communicates with the second purified water channel (15) through a control channel (20); the other end of the second purified water channel (15) communicates with the water outlet joint (3).

2. The filtering regulating valve according to claim 1, wherein a flushing outlet pipe (16) is installed at one end of the valve body (1); a flushing outlet port (17) is arranged at one end of the control channel (20); a flushing flow channel (18) is formed between the valve body (1) and the valve bottom cover (8); and the flushing outlet pipe (16) communicates with the flushing outlet port (17) through the flushing flow channel (18).

3. The filtering regulating valve according to claim 2, wherein a first valve stem (19) is movably arranged in the control channel (20); a first return spring (21) abuts between one end of the first valve stem (19) and the valve body (1); the other end of the first valve stem (19) extends out of the valve body (1) and a first pushing portion (22) is arranged thereon; a first sealing plug (23) is arranged on a periphery of the first valve stem (19); the first valve stem (19) moves horizontally along the control channel (20) between a first position and a second position; when the first valve stem (19) is at the first position, the flushing outlet port (17) is closed, and the first purified water channel (14) communicates with the second purified water channel (15) through the control channel (20); when the first valve stem (19) is at the second position, the second purified water channel (15) is closed, and the first purified water channel (14) communicates with the flushing outlet port (17) through the control channel (20).

4. The filtering regulating valve according to claim 3, wherein a first sealing ring (24) is arranged on a periphery of the first sealing plug (23); a first mounting seat (25) is arranged in the control channel (20); water passing holes (26) are opened on a side wall of the first mounting seat (25); a sealing member (27) is installed at the other end of the control channel (20); and avoidance holes (28) configured for the first valve stem (19) to extend through are respectively arranged in the sealing member (27) and the first mounting seat (25).

5. The filtering regulating valve according to claim 1, wherein at least one external connecting head (29) is provided on one end of the water inlet joint (2) and on one end of the water outlet joint (3); at least one first connecting joint (30) and at least one second connecting joint (31) are respectively formed on the other end of the water inlet joint (2) and the other end of the water outlet joint (3); first connecting interfaces (32) communicating with the control cavity (4) are respectively formed on both upper sides of the valve body (1); a second connecting interface (33) communicating with the control cavity (4) and a third connecting interface (34) communicating with the second purified water channel (15) are respectively formed on both lower sides of the valve body (1); the at least one first connecting joint (30) communicates with the first connecting interfaces (32); the at least one second connecting joint (31) on the water inlet joint (2) communicates with the second connecting interface (33); and the at least one second connecting joint (31) on the water outlet joint (3) communicates with the third connecting interface (34).

6. The filtering regulating valve according to claim 5, wherein at least one water passage cavity (35) is respectively formed in the water inlet joint (2) and the water outlet joint (3), the at least one water passage cavity (35) is arranged between the at least one external connecting head (29) and the at least one connecting joint; at least one inlet/outlet water port (36) configured to communicate with the at least one external connecting head (29) is provided on one side of the at least one water passage cavity (35); at least one first through hole (37) and at least one second through hole (38) are respectively provided on the other side of the at least one water passage cavity (35); the at least one first through hole (37) communicates with the at least one first connecting joint (30); the at least one second through hole (38) communicates with the at least one second connecting joint (31); at least one second valve stem (39) is movably arranged in the at least one water passage cavity (35); at least one second reset spring (40) abuts between one end of the at least one second valve stem (39) and the at least one water passage cavity (35); the other end of the at least one second valve stem (39) extends out of the at least one joint and at least one second pushing portion (41) is provided thereon; at least one second sealing plug (42) is arranged on a periphery of the at least one second valve stem (39); the at least one second valve stem (39) moves vertically along the at least one water passage cavity (35) between a first position and a second position; when the at least one second valve stem (39) is at the first position, the at least one first through hole (37) is closed, and the at least one inlet/outlet water port (36) communicates with the at least one second through hole (38) through the at least one water passage cavity (35); when the at least one second valve stem (39) is at the second position, the at least one second through hole (38) is closed, and the at least one inlet/outlet water port (36) communicates with the at least one first through hole (37) through the at least one water passage cavity (35).

7. The filtering regulating valve according to claim 1, wherein the valve core assembly (7) comprises a valve seat (43), a lower valve plate (44), an upper valve plate (45), and an adjusting rod (46) configured to drive the upper valve plate (45) to rotate; a third water inlet (47) communicating with the first water inlet (5) and a fourth water inlet (48) communicating with the second water inlet (6) are respectively provided in the lower valve plate (44) and the valve seat (43); an adjusting notch (49) is arranged on one side of the upper valve plate (45) to control opening sizes of the third water inlet (47) and the fourth water inlet (48).

8. The filtering regulating valve according to claim 7, wherein a separation sleeve (50) is arranged between a periphery of the adjusting rod (46) and the valve body (1); the separation sleeve (50) divides the control cavity (4) into upper and lower cavities; a straight-through annular groove (51) is formed on an upper outer periphery of the separation sleeve (50); and a third through hole (52) communicating with the water inlets is opened on a lower side wall of the separation sleeve (50).

9. The filtering regulating valve according to claim 1, wherein a housing (53) is installed on a periphery of the valve body (1); a push button (54) is installed on a side wall of the housing (53); a pushing portion (55) configured to push a first valve stem (19) to move is formed on an inner side wall of the push button (54); the valve core assembly (7) comprises an adjusting rod (46) for controlling the rotation thereof; an rotatable adjusting rotary knob (57) is arranged on an upper end of the housing (53); an upper end of the adjusting rod (46) extends out of the valve body (1) and is connected with the adjusting rotary knob (57); gear numbers (58) are engraved on an outer wall of the adjusting rotary knob (57); and an indicator mark (59) is provided on an upper end surface of the housing (53).

10. A filter bottle, comprising the filtering regulating valve according to any one of claims 1 to 9, further comprising a filter bottle body (60), wherein a filter chamber (61) is formed in the filter bottle body (60), a filter element (62) is arranged in the filter chamber (61), the purified water interface (63) is formed on an upper end of the filter bottle body (60), an upper end of the purified water interface (63) communicates with the first inlet port (11), and a lower end of the purified water interface (63) communicates with an inlet of the filter element (62), and an outlet of the filter element (62) communicates with the filter chamber (61); a first annular wall (64) is formed around a periphery of the purified water interface (63), an inlet water interface (65) is formed between the first annular wall (64) and the purified water interface (63), an upper end of the inlet water interface (65) communicates with the second inlet port (12), and a first hole (66) communicating with the filter chamber (61) is opened on a lower end of the inlet water interface (65), a second annular wall (67) is formed around a periphery of the first annular wall (64), an outlet water interface (68) is formed between the second annular wall (67) and the first annular wall (64), the filter bottle outlet (69) communicating with the filter chamber (61) is opened at a lower end of the outlet water interface (68), and an upper end of the outlet water interface (68) communicates with the purified water inlet (13); a third annular wall (70) is formed around a periphery of the second annular wall (67), at least one protruding portion (71) configured for the at least one second pushing portion (41) to abut against is formed on an upper end surface of the third annular wall (70), so as to keep the at least one second valve stem (39) at a first position.
